# EUROPÄISCHE PATENTSCHRIFT

(11) **EP 1 394 759 B1**
(45) Veröffentlichungstag und Bekanntmachung des Hinweises auf die Patenterteilung: **06.05.2009**
(21) Anmeldenummer: 03017364.5
(22) Anmeldetag: 31.07.2003
(51) Int. Cl.: G08C 19/00, G05B 23/02

(54) **Stör- und/oder Zustandsanalyse**
Failure and/or state analysis
Analyse des défaillances et/ou d'état

(30) Priorität: 23.08.2002 DE 10238829
(43) Veröffentlichungstag der Anmeldung: 03.03.2004
(73) Patentinhaber: Link Systemtechnik GmbH, 79423 Heitersheim (DE)
(72) Erfinder: Link, Harald, Dipl.-Ing. (FH), 79258 Hartheim (DE)
(74) Vertreter: Goy, Wolfgang

(56) Entgegenhaltungen:
- EP-A- 0 428 135
- WO-A-96/20439
- DE-A1- 4 447 288
- US-A1- 2002 013 664

## Beschreibung

Die Erfindung betrifft die Verwendung einer Vorrichtung zum Ausrüsten von elektrischen oder elektronischen Steuerungen von Maschinen zur Stör- und/oder Zustandsanalyse.

Unter dem Begriff "Ausrüsten" ist zu verstehen, daß die elektrischen oder elektronischen Steuerungen von Maschinen entweder mit der erfindungsgemäßen Vorrichtung nachgerüstet werden oder daß die erfindungsgemäße Vorrichtung der Erstausrüstung dient.

Heutzutage arbeiten Maschinen in der Regel mittels einer speicherprogrammierbaren Steuerung SPS. Diese ist teuer. Gleiches gilt auch für die zugehörige Anzeige.

Die Erfindung geht jedoch von Maschinen aus, welche eine derartige speicherprogrammierbare Steuerung SPS nicht aufweisen. Dies ist insbesondere bei älteren Maschinen der Fall. Das Problem bei derartigen Maschinen besteht in der Identifizierung von auftretenden Störungen. Es ist zwar bei derartigen Maschinen bekannt, eine Störmeldeleuchte zur Anzeige einer Störung vorzusehen, doch wird diese Störmeldeleuchte meist nur als Sammelstörungsanzeige verwendet. Eine konkrete Identifikation der spezifischen Störung ist dadurch nicht möglich.

Davon ausgehend liegt der Erfindung die Aufgabe zugrunde, bei Maschinen, welche nicht mit einer speicherprogrammierbaren Steuerung SPS arbeiten, eine Möglichkeit für eine Stör- und/oder Zustandsanalyse zu schaffen.

Eine Vorrichtung zum Ausrüsten von Maschinen die eine speicherprogrammierbare Steuerung aufweisen ist aus dem Dokument US 2002/0013664 bekannt.

Die technische **Lösung** ist gekennzeichnet durch die Merkmale des Anspruchs 1.

Dadurch ist eine Stör- und/oder Zustandsmeldezentrale für Maschinen geschaffen, welche keine speicherprogrammierbare Steuerung SPS aufweisen. Diese Störmeldezentrale ist ein durch einen Mikroprozessor gesteuertes Analysegerät für jegliche Art von Steuerungen, welche ohne programmierbare Logik ausgestattet sind. Das Gerät ist dabei für die Nachrüstung von Maschinensteuerungen, aber auch für eine Erstausrüstung konzipiert. Somit können herkömmliche Steuerungen, welche in einfacher Schütz- sowie Schaltgerätetechnik aufgebaut sind, ohne weiteres nachgerüstet bzw. ausgerüstet werden. Es ist lediglich erforderlich, die zu überwachenden Signalleitungen der Steuerung an den Mikroprozessor anzuschließen. Hierzu können die Signalleitungen mittels Kabeln an eine Buchse angeschlossen werden, welche in einem Gehäuse festgelegt ist. Es ist dann lediglich noch erforderlich, die elektrischen Kontakte der Buchse über ein Kabel mit dem Mikroprozessor bzw. dem Analysegerät zu verbinden. Die Störmeldezentrale analysiert dann aus den Signalen der Steuerung mögliche Fehlerquellen und zeigt diese Fehler mittels einer Anzeige dem Anwender an. Bei dieser Anzeige handelt es sich vorzugsweise um eine 7-Segment-Anzeige, welche zuverlässig arbeitet und darüber hinaus preiswert ist. Jeder erkannte Fehler in der Steuerung oder jeder Maschinenzustand kann mittels einer Ziffer der Anzeige dem Anwender sichtbar gemacht werden. Dadurch ist eine detaillierte Störungsanalyse möglich, welche nicht nur den Anwender zur Störungsbehebung unterstützt, sondern auch das Servicepersonal, das bei auftretenden Störungen meist bereits telefonisch eine detailliertere Hilfestellung geben kann. Die Grundidee des erfindungsgemäßen Gerätes besteht somit darin, die Digitaleingänge des Gerätes über einen Kabelbaum mit den störungsrelevanten Signalen der bestehenden Steuerung zu verbinden. Der Mikroprozessor analysiert mit einem maschinenspezifischen Programm die Signale und steuert dementsprechend die Anzeigeeinrichtung und - wie noch auszuführen sein wird - ein Relais an.

Bei den Eingängen des Mikroprozessors handelt es sich gemäß der Weiterbildung in Anspruch 2 um Digitaleingänge.

Eine weitere Weiterbildung schlägt gemäß Anspruch 3 vor, dass die Eingänge über Optokoppler mit der Peripherie des Mikroprozessors verbunden sind. Die Digitaleingänge sind somit signaltechnisch über diese Optokoppler mit der Mikroprozessorperipherie verbunden. Das Bezugspotenzial für die Optokoppler ist das negative Potenzial der Elektronikversorgung.

Gemäß der Weiterbildung in Anspruch 4 befindet sich auf der Frontseite der Störmeldezentrale vorzugsweise ein Einstellknopf, an welchem ein von der Maschine abhängiger Parameter frei einstellbar ist. Es kann sich dabei um die Einstellung der Laufzeit, Störunterdrükkung etc. handeln.

Schließlich schlägt die Weiterbildung gemäß Anspruch 5 einen Relaiskontakt vor. Dieser ist als Öffner ausgeführt und kann beispielsweise die Funktion einer Selbsthaltung unterbrechen. Der Relaiskontakt wird bei Bedarf mittels Kabelbaum in die Funktion der Steuerung integriert und kann durch die Software vom Mikroprozessor geöffnet werden.

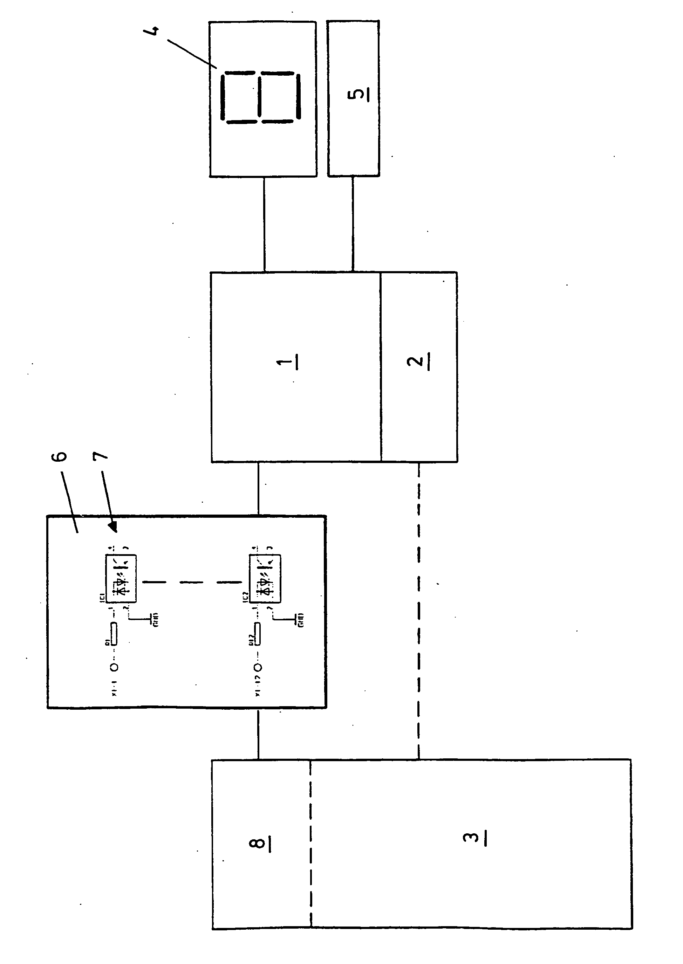

Ein Ausführungsbeispiel einer erfindungsgemäßen Vorrichtung zum Nachrüsten oder zur Erstausrüstung von elektrischen oder elektronischen Steuerungen von Maschinen zur Stör- und/oder Zustandsanalyse wird nachfolgend anhand der Zeichnung beschrieben, welche in einem Blockdiagramm den Geräteaufbau zeigt.

Kernstück des Gerätes ist ein Mikroprozessor 1 mit Peripherie sowie einer Analysesoftware. Dem Mikroprozessor 1 zugeordnet ist ein Relaiskontakt 2, welcher an die Elemente einer Maschine 3 angeschlossen ist (durch die gestrichelte Linie angedeutet), nämlich insbesondere Motorschutz, Schütze, Schalter, Sensoren, Zeitrelais, Verdrahtung etc. Weiterhin ist an den Mikroprozessor 1 des Analysegerätes eine Anzeigeeinrichtung 4 in Form einer 7-Segment-Anzeige sowie eine Einstelleinrichtung 5 angeschlossen.

Vor allem weist das Analysegerät zwölf Digital-Eingänge 6 unter Verwendung von Optokopplern 7 auf. Diese Eingänge 6 des Analysegerätes sind über einen Kabelbaum mit der Steuerung 8 der Maschine 3 verbunden.

Das vorbeschriebene Analysegerät ist für die Nachrüstung von herkömmlichen Maschinensteuerungen konzipiert, die in einfacher Schütz- sowie Schaltgerätetechnik aufgebaut sind. Außerdem ist das vorbeschriebene Analysegerät für die Erstausrüstung von Maschinensteuerungen gedacht. Es ist lediglich erforderlich, die zu überwachenden Signalleitungen der Steuerung über Kabel mit den Digital-Eingängen 6 des Analysegerätes zu verbinden. Das Analysegerät analysiert aus den Signalen der Steuerung mögliche Fehlerquellen und zeigt diese Fehler mittels der Anzeigeeinrichtung 4 dem Anwender an. Dabei kann jeder anstehende Fehler oder Maschinenzustand mittels einer Ziffer in der 7-Segment-Anzeige dem Anwender sichtbar gemacht werden. Zusätzlich kann durch den programmierbaren Relaiskontakt 2, welcher als Öffner ausgeführt ist, beispielsweise die Funktion einer Selbsthaltung unterbrochen werden. Mittels der Einstelleinrichtung 5 können von der Maschinen abhängige Parameter frei eingestellt werden.

### Bezugszeichenliste

- 1: Mikroprozessor
- 2: Relaiskontakt
- 3: Maschine
- 4: Anzeigeeinrichtung
- 5: Einstelleinrichtung
- 6: Eingang
- 7: Optokoppler
- 8: Steuerung

## Patentansprüche

1. Verwendung eines mehrere Eingänge (6), eine Auswertesoftware für die Eingangssignale sowie eine Anzeigeeinrichtung (4) aufweisenden Mikroprozessors (1) zur Überwachung von Maschinen durch
nachrüsten von elektrischen oder elektronischen Steuerungen (8) von derartigen Maschinen (3), welche keine speicherprogrammierbare Steuerung SPS aufweisen mit diesem Mikroprozessor zur Stör- und/oder Zustandsanalyse,
wobei die Eingänge (6) des Mikroprozessors (1) an die zu überwachenden Signalleitungen der Steuerung (8) angeschlossen werden.

2. Verwendung nach dem vorhergehenden Anspruch,
**dadurch gekennzeichnet,**
**daß** die Eingänge (6) Digitaleingänge sind.

3. Verwendung nach einem der vorhergehenden Ansprüche,
**dadurch gekennzeichnet,**
**daß** die Eingänge (6) über Optokoppler (7) mit der Peripherie des Mikroprozessors (1) verbunden sind.

4. Verwendung nach einem der vorhergehenden Ansprüche,
**dadurch gekennzeichnet,**
**daß** der Mikroprozessor (1) eine Einstelleinrichtung (5) zum Einstellen von Maschinenparametern aufweist.

5. Verwendung nach einem der vorhergehenden Ansprüche,
**dadurch gekennzeichnet,**
**daß** ein programmierbarer Relaiskontakt (2) vorgesehen ist, welcher in die Funktion der Steuerung (8) integrierbar und vom Mikroprozessor (1) öffenbar ist.

## Claims

1. Use of a microprocessor (1) having a plurality of inputs (6), evaluation software for the input signals, and a display device (4), for monitoring machines by retrofitting electrical or electronic controllers (8) of machines (3) of this type, which have no memory-programmable controller SPS, with this microprocessor for fault and/or state analysis, wherein the inputs (6) of the microprocessor (1) are connected to the control lines of the controller (8) that are to be monitored.

2. Use according to the preceding claim, **characterised in that** the inputs (6) are digital inputs.

3. Use according to any one of the preceding claims, **characterised in that** the inputs (6) are connected by means of optical couplers (7) to the periphery of the microprocessor (1).

4. Use according to any one of the preceding claims, **characterised in that** the microprocessor (1) has an adjustment device (5) for adjusting machine parameters.

5. Use according to any one of the preceding claims, **characterised in that** a programmable relay contact (2) is provided, which can be integrated into the function of the controller (8) and can be opened by the microprocessor (1).

## Revendications

1. Utilisation d'un microprocesseur (1) présentant plusieurs entrées (6), un logiciel d'évaluation des signaux d'entrée ainsi qu'un dispositif d'affichage (4) pour la surveillance de machines par adaptation de ce microprocesseur sur des commandes électriques ou électroniques (8) de telles machines (3), lesquelles ne présentent pas de commande par programme enregistré (SPS), pour analyser des défaillances et/ou des états,
les entrées (6) du microprocesseur (1) étant connectées aux lignes de signalisation à surveiller de la commande (8).

2. Utilisation selon la revendication précédente,
**caractérisée en ce**
**que** les entrées (6) sont des entrées numériques.

3. Utilisation selon l'une des revendications précédentes,
**caractérisée en ce**
**que** les entrées (6) sont reliées à la périphérie du microprocesseur (1) par l'intermédiaire d'optocoupleurs (7).

4. Utilisation selon l'une des revendications précédentes,
**caractérisée en ce**
**que** le microprocesseur (1) présente un dispositif de réglage (5) pour régler des paramètres de machines.

5. Utilisation selon l'une des revendications précédentes,
**caractérisée en ce**
**qu'**il est prévu un contact de relais programmable (2) qui peut être intégré dans la fonction de la commande (8) et ouvert par le microprocesseur (1).
